# EUROPEAN PATENT APPLICATION

(11) **EP 4 668 681 A1**
(43) Date of publication of application: **24.12.2025**
(21) Application number: 25179050.7
(22) Date of filing: 27.05.2025
(51) Int. Cl.: H04L 12/40, H04S 1/00, H04S 3/00, H04S 7/00

(54) **AUDIO PROCESSING MODULE FOR EXTENDING AUTOMOTIVE AUDIO CAPABILITIES**

(30) Priority: 21.06.2024 US 202418750021
(71) Applicant: Harman Becker Automotive Systems GmbH, 76307 Karlsbad (DE)
(72) Inventor: CHEN, Zhijun, 76307 Karlsbad-Ittersbach (DE)
(74) Representative: Kraus & Lederer PartGmbB

(57) **Abstract**

Various embodiments disclose an audio processing module for a vehicular audio system, comprising: a housing; a first processor that performs additional audio signal processing for at least one of an electronic control unit of the vehicular audio system or an amplifier of the vehicular audio system and is disposed within the housing; a second processor that performs additional control signal processing for at least one of the electronic control unit of the vehicular audio system or the amplifier of the vehicular audio system and is disposed within the housing; a first communication bus that is disposed within the housing and is communicatively coupled to the first processor and a first communication network of the vehicular audio system; and a second communication bus that is disposed within the housing and is communicatively coupled to the second processor and a bus of a second communication network of the vehicular audio system.

## Description

### BACKGROUND

### Field of the Various Embodiments

The various embodiments relate generally to audio systems and, more specifically, to an audio processing module for extending automotive audio capabilities.

### Description of the Related Art

Advances in automotive audio have provided many features that improve the in-vehicle experience for consumers. Examples of such features include seat-specific equalizer tuning, replication of the acoustics of a specific venue, and the detection and enhancement of spoken content, among others. Further advances are being developed continuously.

A recurring problem with the implementation of new automotive audio features is associated with the audio processing and memory resources incorporated in a particular model of automobile. In particular, the provisioning of processing and memory resources that are required for a new automotive audio feature can be problematic for some models of automobile. This is because automobile manufactures generally have a developmental cycle of several years for a specific model of vehicle. As a result, the audio-processing capabilities and memory capacity for a particular model of automobile can oftentimes be finalized years before that particular model of automobile is manufactured. Thus, by the time of manufacture, new automotive audio features are frequently developed that require more or different audio processing and/or memory resources than are available in the audio system of the automobile being manufactured. Consequently, due to audio system hardware constraints introduced earlier in the design process, such new audio features cannot be implemented in the automobile currently being manufactured.

In light of the above, more effective techniques for implementing new automotive audio features are needed.

### SUMMARY

Various embodiments disclose an audio processing module for a vehicular audio system that includes: a housing; a first processor that performs additional audio signal processing for at least one of an electronic control unit of the vehicular audio system or an amplifier of the vehicular audio system and is disposed within the housing; a second processor that performs additional control signal processing for at least one of the electronic control unit of the vehicular audio system or the amplifier of the vehicular audio system and is disposed within the housing; a first communication bus that is disposed within the housing and is communicatively coupled to the first processor and a first communication network of the vehicular audio system; and a second communication bus that is disposed within the housing and is communicatively coupled to the second processor and a bus of a second communication network of the vehicular audio system.

Further embodiments provide, among other things, a vehicular audio system, that includes: at least one loudspeaker; an amplifier communicatively coupled to the at least one loudspeaker; an electronic control unit communicatively coupled to the amplifier; and an audio processing module that is communicatively coupled to the amplifier and the electronic control unit. The audio processing module includes: a housing; a first processor that performs additional audio signal processing for at least one of an electronic control unit of the vehicular audio system or an amplifier of the vehicular audio system and is disposed within the housing; a second processor that performs additional control signal processing for at least one of the electronic control unit of the vehicular audio system or the amplifier of the vehicular audio system and is disposed within the housing; a first communication bus that is disposed within the housing and is communicatively coupled to the first processor and a first communication network of the vehicular audio system; and a second communication bus that is disposed within the housing and is communicatively coupled to the second processor and a bus of a second communication network of the vehicular audio system.

Further embodiments provide a method for manufacturing an audio system that includes audio-processing extension module.

At least one technical advantage of the disclosed techniques relative to the prior art is that the disclosed techniques enable the audio system of a vehicle to be enhanced with audio processing and memory capabilities that are needed to implement audio features that otherwise cannot be implemented by the audio system. Thus, computationally intensive audio features that have been developed after the audio system electronics and networks of the vehicle have been finalized can still be performed by the audio system. A further advantage is that bandwidth limitations of audio system networks can be reduced by splitting an audio system network into two networks that together can handle the additional audio signal traffic associated with the enhanced processing and memory capabilities of the audio system. These technical advantages provide one or more technological advancements over prior art approaches.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 is a conceptual diagram illustrating a vehicle configured to implement one or more aspects of the present disclosure;
Figure 2 is a more detailed conceptual illustration of the audio-processing extension module of Figure 1, according to various embodiments;
Figure 3 is a more detailed conceptual illustration of the audio system of Figure 1, according to various embodiments;
Figure 4 is a conceptual illustration of an audio system that includes an audio-processing extension module, according to various embodiments.
Figure 5 is a conceptual illustration of an audio system that includes an audio-processing extension module, according to various embodiments.
Figure 6 is a conceptual illustration of an audio system that includes an audio-processing extension module, according to various embodiments.
Figure 7 is a conceptual illustration of an audio system that includes multiple audio-processing extension modules, according to various embodiments.
Figure 8 sets forth a flow diagram of method steps for manufacturing an audio system that includes an audio-processing extension module, according to various embodiments of the present disclosure.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

### System Overview

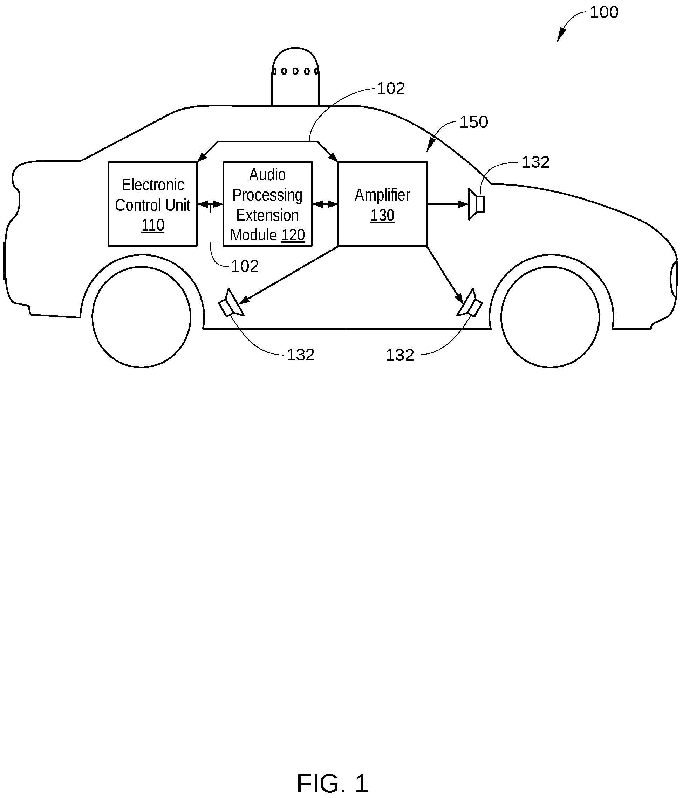

Figure 1 is a conceptual diagram illustrating a vehicle 100 configured to implement one or more aspects of the present disclosure. Vehicle 100 can be human- or computer-operated vehicle, such as a conventional or self-driving car, truck, bus, and the like, that includes an audio system 150. Audio system 150 provides audio content to passengers (not shown) within vehicle 100, such as music, speech-based content, audible warning indicators, and/or the like. In the embodiment illustrated in Figure 1, audio system 150 includes, without limitation, an electronic control unit (ECU) 110, an audio-processing extension module 120, an amplifier 130, and a plurality of loudspeakers 132.

ECU 110 is an in-vehicle device or system that processes data, makes decisions associated with audio system 150, and controls operation of audio system 150. In some embodiments, ECU 110 is included in a head unit (HU), in-vehicle infotainment (IVI) system, or other domain controller. For example, in some embodiments, ECU 110 is included in an infotainment system of vehicle 100. As such, ECU 110 can be communicatively coupled to various input/output devices included in vehicle 100, such as a user interface touch screen, 2D or 3D camera sensor, voice-based user interface control input devices (e.g., knobs, buttons, switches, and/or the like), one or more universal serial bus (USB) connectors, and/or the like.

It is noted that vehicle 100 can include a plurality of additional ECUs and/or domain controllers (not shown) that are responsible for other aspects of the operation of vehicle 100 and are not associated with audio system 150. For example, in some embodiments, vehicle 100 can further include a domain controller and/or multiple ECUs for the sensors of vehicle 100, for the actuators required to implement advanced driver-assistance systems (ADAS), for the actuators required for autonomous driving (AD), and/or the like.

Amplifier 130 generates one or more electrical audio, excitor, or others output signals based on audio and control signals received from ECU 110 and/or audio-processing extension module 120. Amplifier 130 is coupled to a plurality of loudspeakers 132 and transmits the one or more electrical audio output signals to loudspeakers 132. Each loudspeaker 132 converts audio output signals received from amplifier 130 into a corresponding sound. In some embodiments, each loudspeaker 132 includes one or more electroacoustic transducers for converting the received audio output signal(s) into a corresponding sound.

In some embodiments, amplifier 130 receives the audio and control signals from ECU 110 and/or audio-processing extension module 120 via one or more wired networks 102 within vehicle 100. In the embodiment illustrated in Figure 1, audio-processing extension module 120 is communicatively coupled in series with ECU 110 and amplifier 130. In other embodiments, ECU 110, audio-processing extension module 120, and amplifier 130 are communicatively coupled in parallel and/or via one or more ring networks. In yet other embodiments, the one or more wired networks 102 within vehicle 100 can have any other technically feasible topology, such as a mesh topology, a ring topology, a tree topology, and/or the like.

In some embodiments, amplifier 130 includes audio processing capability, such as a digital signal processor or other microprocessor, and/or a central processor. In such embodiments, audio signal processing in audio system 150 can be distributed between ECU 110, audio-processing extension module 120, and amplifier 130. In such embodiments, amplifier 130 may also transmit audio signals to ECU 110 and/or audio-processing extension module 120 via the one or more wired networks 102. Alternatively, in some embodiments, amplifier 130 does not perform audio signal processing before generating the audio output signals and outputting the audio output signals to loudspeakers 132.

Audio-processing extension module 120 enhances the audio-processing capabilities of audio system 150 without exceeding or limiting the bandwidth of the one or more wired networks 102 within vehicle 100. In particular, in some embodiments, audio-processing extension module 120 includes additional processing capability. According to various embodiments, this additional processing capability enables one or more automotive audio features that require more or different audio processing than is available in audio system 150 (such as in ECU 110 and/or amplifier 130). For example, audio features such as in-car surround sound, in-car communications, and virtual-venue simulation can require more processing power than is available in ECU 110 and/or amplifier 130. The additional processing capability provided to audio system 150 by audio-processing extension module 120 can enable such audio features.

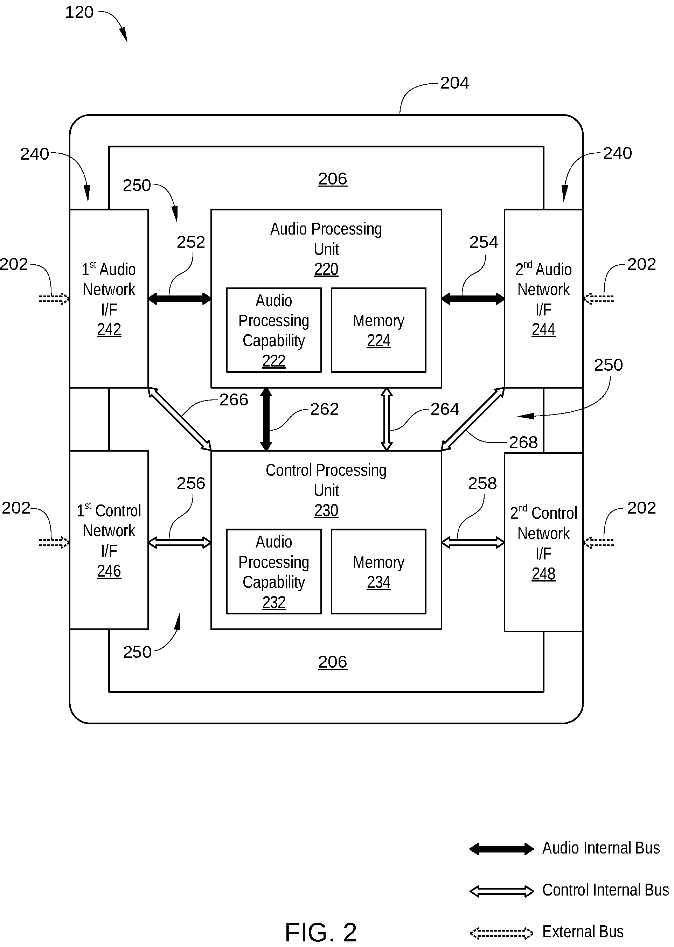

In some embodiments, audio-processing extension module 120 further includes additional memory that enables one or more automotive audio features requiring more memory resources than are available in audio system 150. Further, in some embodiments, audio-processing extension module 120 includes physical network interfaces and communication buses that prevent the introduction of network bottlenecks when audio-processing extension module 120 is added to audio system 150. One embodiment of audio-processing extension module 120 is described below in conjunction with Figure 2.

Figure 2 is a more detailed conceptual illustration of audio-processing extension module 120, according to various embodiments. In the embodiment illustrated in Figure 2, audio-processing extension module 120 includes, without limitation, an audio processing unit 220, a control processing unit 230, a first audio network interface (I/F) 242, a second audio network I/F 244, a first control network I/F 246, and a second control network I/F 248, all disposed within a housing 204. Audio-processing extension module 120 further includes, without limitation, one or more internal buses 250 that communicatively couple the above components of audio processing extension module 120 as shown. In some embodiments, some or all of the above components of audio-processing extension module 120 are disposed on, formed on, or coupled to a printed circuit board (PCB) 206 as shown.

In some embodiments, housing 204 is configured to protect electronic components disposed therein from moisture, dust, vibration, and the like. In some embodiments housing 204 can be a sealed container (plastic, metallic, etc.) that is suitable for applications involving automotive electronics. Alternatively or additionally, housing 204 can include some form of encapsulation (such as hot-melt polyamide), sealing (such as with acrylic impregnation), and/or potting with a thermally conductive resin.

The one or more internal buses 250 of audio-processing extension module 120 communicatively couple certain components of audio-processing extension module 120, for example with sufficient bandwidth for full audio input and output capability. In the embodiment illustrated in Figure 2, the one or more internal buses 250 include: an internal bus 252 that communicatively couples first audio network I/F 242 and audio processing unit 220 and an internal bus 254 that communicatively couples audio processing unit 220 and second audio network I/F 244. Thus, internal bus 252 and internal bus 254 enable an audio network of audio system 150 to pass through audio processing extension module 120. In some embodiments, the one or more internal buses 250 also include: an internal bus 256 that communicatively couples first control network I/F 246 and control processing unit 230 and an internal bus 258 that communicatively couples control processing unit 230 and second control network I/F 248. Thus, internal bus 256 and internal bus 258 enable a control network of audio system 150 to also pass through audio-processing extension module 120.

In some embodiments, the one or more internal buses 250 also include an internal bus 266 and an internal bus 268 that communicatively couple audio processing unit 220 and control processing unit 230 as shown. Alternatively or additionally, in some embodiments, the one or more internal buses 250 include an internal bus 266 that communicatively couples control processing unit 230 and first audio network I/F 242 and an internal bus 268 that communicatively couples control processing unit 230 and second audio network I/F 244. In such embodiments, an audio network of audio system 150 carries one or more control signals in addition to audio signals. Therefore, in such embodiments, a bus 202 of the audio network that is coupled to first audio network I/F 242 includes one or more conductors for carrying control signals and a bus 202 of the audio network that is coupled to second audio network I/F 244 includes one or more conductors for carrying control signals. As a result, internal bus 266 and internal bus 268 communicatively couple control processing unit 230 to the audio network.

In the embodiment illustrated in Figure 2, internal buses 252, 254, and 262 can be part of an audio network (not shown) of audio system 150, and are configured for the transmission of audio signals within audio system 150. Examples of audio signals transmitted via internal buses 252, 254, and 262 include audio input channels that provide audio information from ECU 110 to audio processing unit 220 and/or amplifier 130, audio feedback channels that provide audio information to ECU 110 from audio processing unit 220 and/or amplifier 130, Dolby^{®} Atmos source inputs, separate source signals for each seat, increasing infotainment source type signals, safety-related sound generation signals, and/or the like. As such, in some embodiments, internal buses 252, 254, and 262 can include a large number of conductors, for example 10, 20, or more, to accommodate the various audio channels employed by audio system 150. Similarly, internal buses 256, 258, 264, 266, and 268 can be part of a control network (not shown) of audio system 150, and are configured for the transmission of control signals within audio system 150. Examples of control signals transmitted via internal buses 256, 258, 264, 266, and 268 include volume or other control signals from ECU 110 or audio processing unit 220, Main Audio fruitful Control, specially defined infotainment audio commands (e.g., fader in, fader out, individual speaker or multi-speaker output commands), ECU diagnostic commands, ECU reprogram commands, and/or the like.

In some embodiments, internal buses 250 can include conductors formed on or within PCB 206. Alternatively or additionally, in some embodiments, internal buses 250 can include any other technically feasible wiring or conductors for transmitting audio and/or control signals within audio system 150.

First audio network I/F 242, second audio network I/F 244, first control network I/F 246, and second control network I/F 248 (referred to herein collectively as "network interfaces 240") are configured to be communicatively coupled to the one or more wired networks 102 shown in Figure 2. For example, in some embodiments, some or all of network interfaces 240 are disposed at or extend from a surface of housing 204. Further, in some embodiments, some or all of network interfaces 240 include suitable physical connectors (not shown) for connection to a respective bus 202 of the one or more wired networks 102.

Generally, network interfaces 240 can be selected and/or scaled to be compatible with a particular audio system 150 that requires additional processing and/or memory capabilities. For example, in some embodiments, the number of conductors that each network interface 240 can accommodate can be selected based on a particular audio system 150. First audio network I/F 242 and second audio network I/F 244 can include a standard automotive industry audio I/F and be configured to be compatible with any conventional automotive audio communication protocol, such as Media Oriented Systems Transport (MOST), INICnet^{™}, Automotive Audio Buss (A2B) 1.0 or 2.0, Sony/Philips Digital Interface Format (S/PDIF), and the like. Similarly, first control network I/F 246 and second control network I/F 248 can include a standard automotive industry audio I/F and be configured to be compatible with any conventional control communication protocol, such as Inter-Integrated Circuit (I2C), Serial Peripheral Interface (SPI) over A2B, or A2B mailbox communication, and the like.

According to various embodiments, audio-processing extension module 120 is configured such that a bandwidth of the one or more wired networks 102 of audio system 150 is not reduced when audio-processing extension module 120 is coupled to and included in audio system 150. Thus, in some embodiments, each of network interfaces 240 includes a physical connector for accommodating the conductors of a bus 202 coupled thereto. For example, when the bus 202 coupled to first audio network I/F 242 includes 20 conductors, first audio network I/F 242 includes a connector for accommodating the 20 conductors of that bus 202. Alternatively or additionally, in some embodiments, each of the one or more internal buses 250 includes a number of conductors matching the number of conductors accommodated by the network interface 240 coupled to that internal bus 250. For example, in such embodiments, when first audio network I/F 242 includes 20 conductors, an internal bus 252 that is coupled to first audio network I/F 242 also includes 20 conductors. Similarly, when second audio network I/F 244 includes 20 conductors, an internal bus 254 that is coupled to second audio network I/F 244 also includes 20 conductors. Consequently, an audio network of audio system 150 can be routed through audio-processing extension module 120 with no reduction in bandwidth of the audio network. For example, in one such embodiment, the audio network of audio system 150 can be routed through audio-processing extension module 120 via first audio network I/F 242 and second audio network I/F 244 with no reduction in bandwidth.

In some embodiments, to further prevent a reduction in bandwidth of the one or more wired networks 102 of audio system 150, each of network interfaces 240 can be operable as either a master device, which controls one or more devices in the same wired network, or a slave device, which is controlled by another device in the same wired network. Thus, in such embodiments, first audio network I/F 242 and/or second audio network I/F 244 can be operable as either a master device or a slave device in an audio network of audio system 150, thereby facilitating the integration of audio-processing extension module 120 into the audio network. Similarly, in such embodiments, first control network I/F 246 and/or second control network I/F 248 can be operable as either a master device or a slave device in a control network of audio system 150, thereby facilitating the integration of audio-processing extension module 120 into the control network.

Audio processing unit 220 provides additional audio processing resources for audio system 150, including audio processing capability 222 and memory 224. Thus, in some embodiments, audio processing unit 220 enables audio system 150 to implement one or more automotive audio features that require such additional processing resources. For example, in some embodiments, audio processing capability 222 includes one or more digital signal processors (DSPs), cores in a system on chip (SoC), or any other processing devices suitable for audio processing in audio system 150. Generally, audio processing unit 220 can be selected and/or scaled in capability to provide a particular audio system 150 with specific additional processing capabilities, for example to enable that particular audio system 150 to implement a certain automotive audio feature.

Control processing unit 230 provides additional control processing resources for audio system 150, including audio processing capability 232 and memory 234. Thus, in some embodiments, control processing unit 230 enables audio system 150 to implement one or more automotive audio features that require such additional processing resources. For example, in some embodiments, audio processing capability 232 includes one or more microcontrollers, central processing units (CPUs), microcontroller units (MCUs), cores in an SoC, or any other processing devices suitable for control processing in audio system 150. Generally, control processing unit 230 can be selected and/or scaled in capability to provide a particular audio system 150 with specific additional processing capabilities, for example to enable that particular audio system 150 to implement a certain automotive audio feature.

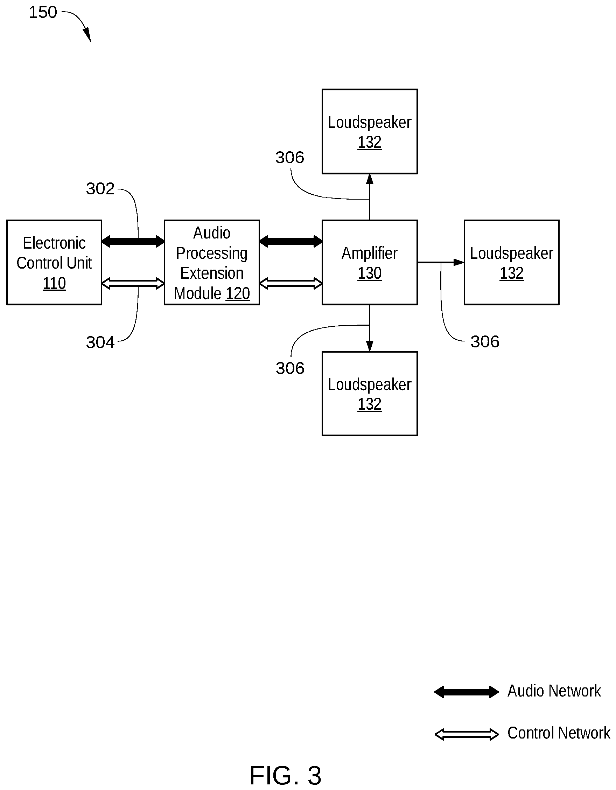

Figure 3 is a more detailed conceptual illustration of audio system 150, according to various embodiments. In the embodiment illustrated in Figure 3, ECU 110, audio-processing extension module 120, and amplifier 130 are communicatively coupled via an audio network 302 and a control network 304. Audio network 302 is a wired network for transmitting audio signals between ECU 110, audio-processing extension module 120, and/or amplifier 130, such as audio input signals that undergo audio processing to generate one or more electrical audio output signals 306 that are transmitted to loudspeakers 132. Control network 304 is a wired network for transmitting control signals between ECU 110, audio-processing extension module 120, and/or amplifier 130, such as volume control signals and the like. According to various embodiments, the inclusion of audio-processing extension module 120 enhances the audio-processing capabilities of audio system 150 without exceeding or limiting the bandwidth of audio network 302 or control network 304. In the embodiment illustrated in Figure 3, audio-processing extension module 120 is communicatively coupled in series with ECU 110 and amplifier 130. In other embodiments, audio-processing extension module 120 can be communicatively coupled to audio network 302 or control network 304 as an additional node thereof.

### Processing Extension Module Implemented as Additional Node of Audio Network and Control Network

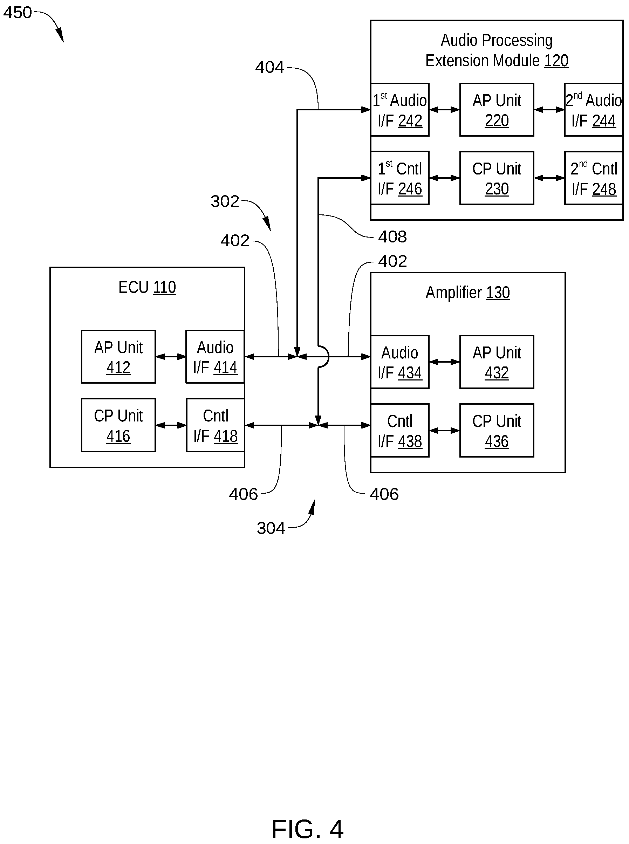

In some embodiments, audio system 150 can require additional processing and/or memory capabilities to implement one or more audio features, but can include sufficient bandwidth (available transfer channels or slots, referred to herein as "conductors") in audio network 302 and control network 304 to handle audio signal traffic and control signal traffic associated with audio-processing extension module 120. For example, prior to the addition of audio-processing extension module 120 to a particular instance of audio system 150, traffic between ECU 110 and amplifier 130 on audio network 302 may utilize 60% of the conductors of audio network 302 (leaving 40% of the conductors of audio network 302 available) and traffic between ECU 110 and amplifier 130 on control network 304 may utilize 50% of the conductors of control network 304 (leaving 50% of the conductors of control network 304 available). In such an instance, when audio signal traffic associated with adding audio-processing extension module 120 requires 40% or fewer of the conductors of audio network 302 and control signal traffic associated with adding audio-processing extension module 120 requires 40% or fewer of the conductors of control network 304, audio-processing extension module 120 can be implemented in audio system 150 as an additional node of audio network 302 and control network 304. One such embodiment is described below in conjunction with Figure 4.

Figure 4 is a conceptual illustration of an audio system 450 that includes audio-processing extension module 120, according to various embodiments. In some embodiments, audio system 450 is employed when an existing audio system is to be modified with audio-processing extension module 120, and the audio network and the control network of the existing audio system can accommodate audio-processing extension module 120. In some embodiments, audio system 450 can be an automotive system for a vehicle that is consistent with audio system 150 of Figures 1 - 3. In audio system 450, audio-processing extension module 120 is communicatively coupled to ECU 110 and amplifier 130 via buses 402 and 404 of audio network 302 and buses 406 and 408 of control network 304. In the embodiment illustrated in Figure 4, audio-processing extension module 120 is communicatively coupled to audio network 302 as an additional node and to control network 304 as an additional node. As a result, in some embodiments, ECU 110 can operate normally and therefore be "blind" to the addition of audio-processing module 120. In audio system 450, audio network 302 includes an audio network I/F 414 of ECU 110, buses 402 and 404, first audio network I/F 242, and audio network I/F 434 of amplifier 130, and control network 304 includes a control network I/F 418 of ECU 110, buses 406 and 408, first control network I/F 246, and control network I/F 438 of amplifier 130.

In this embodiment, audio signal traffic associated with the addition of audio-processing extension module 120 to audio system 450 is handled via the available conductors of audio network 302. This is because audio network 302 of audio system 450 includes sufficient bandwidth (available conductors) to handle the additional audio signal traffic associated with audio-processing extension module 120. Examples of such audio signal traffic include audio signals transmitted from ECU 110 to audio-processing extension module 120 for signal processing, feedback signals transmitted from audio-processing extension module 120 back to ECU 110, and/or electrical audio output signals for loudspeakers 132 that are transmitted from audio-processing extension module 120 to amplifier 130. Further examples of such audio traffic include sensor signals, microphone data, anti-noise audio data, middle-processing data from ECU 110 and/or amplifier 130, and data associated with return of processing results, among others.

In this embodiment, control signal traffic associated with the addition of audio-processing extension module 120 to audio system 450 is handled via the available conductors of control network 304. This is because control network 304 of audio system 450 includes sufficient bandwidth (available conductors) to handle the additional control signal traffic associated with audio-processing extension module 120. Examples of such control signal traffic include control signals transmitted from ECU 110 to audio-processing extension module 120, feedback control signals transmitted from audio-processing extension module 120 back to ECU 110, and/or control signals that are transmitted from audio-processing extension module 120 to amplifier 130. Further examples include zone-audio-related commands, brand-specific audio commands, commands associated with new added features, and/or commands associated with ECU diagnostics, such as active sound test commands, auto test commands, test result queries, ECU reprogram related version checks, hand shake signals, image file transfer signals, and reprogram check sum verify signals, among others.

ECU 110 can be consistent with ECU 110 of Figures 1 and 3. In the embodiment illustrated in Figure 4, ECU 110 includes an audio processing (AP) unit 412 that provides base audio processing resources for audio system 450, a control processing (CP) unit 416 that provides base control processing resources for audio system 450, an audio network I/F 414 that communicatively couples AP unit 412 to audio network 302, and a control network I/F 418 that communicatively couples CP unit 416 to control network 304. Amplifier 130 can be consistent with amplifier 130 of Figures 1 and 3. In the embodiment illustrated in Figure 4, amplifier 130 includes an AP unit 432 that provides base audio processing resources for audio system 450, a CP unit 436 that provides base control processing resources for audio system 450, an audio network I/F 434 that communicatively couples AP unit 432 to audio network 302, and a control network I/F 438 that communicatively couples CP unit 436 to control network 304.

According to various embodiments, the base audio processing resources and/or the base control processing resources for audio system 450 are insufficient for implementing certain automotive audio features. Consequently, in the embodiment illustrated in Figure 4, audio-processing extension module 120 is communicatively coupled to audio network 302 and control network 304 as shown to provide additional audio processing resources and/or the additional control processing resources for audio system 450. In some embodiments, first audio network I/F 242, first control network I/F 246, AP unit 220, and/or CP unit 230 can be selected to be compatible with audio system 450. For example, first audio network I/F 242 can be configured to accommodate a suitable number of conductors to enable connection via bus 404 to audio network 302 as an additional node, and first control network I/F 246 can be configured to accommodate a suitable number of conductors to enable connection via bus 408 to control network 304 as an additional node. Similarly, processing capabilities and/or memory resources of AP unit 220 and/or CP unit 230 can be selected to provide audio system 450 with sufficient processing and/or memory to perform certain automotive audio features. Further, in the embodiment illustrated in Figure 4, first audio network I/F 242 and first control network I/F 246 can be configured to be operable in a slave mode. Alternatively or additionally, in some embodiments, second audio network I/F 244 and second control network I/F 248 may be omitted from audio-processing extension module 120, because audio-processing extension module 120 is implemented as an additional node of audio network 302 and control network 304 and second audio network I/F 244 and second control network I/F 248 are not needed for connection to audio network 302 or control network 304.

### Processing Extension Module Separates Audio Network into Two Sub-Networks and Control Network into Two Sub-Networks

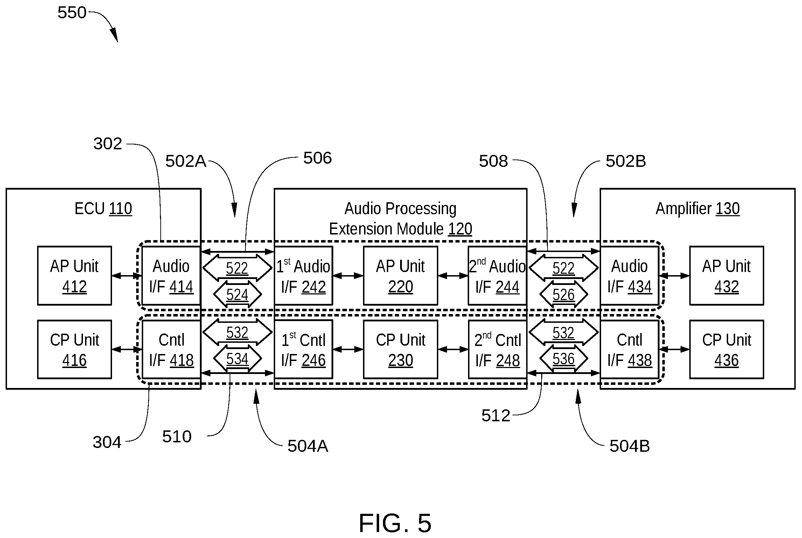

Returning to Figure 3, in some instances, audio system 150 can require additional processing and/or memory capabilities to implement one or more audio features, but also be bandwidth limited. For example, in some embodiments, audio system 150 has insufficient bandwidth (available conductors) in audio network 302 and in control network 304 to handle audio signal traffic and control signal traffic associated with audio-processing extension module 120. In an illustrative example, prior to the addition of audio-processing extension module 120 to a particular instance of audio system 150, traffic between ECU 110 and amplifier 130 on audio network 302 utilizes 60% of the conductors of audio network 302 (leaving 40% of the conductors of audio network 302 available) and traffic between ECU 110 and amplifier 130 on control network 304 utilizes 50% of the conductors of control network 304 (leaving 50% of the conductors of control network 304 available). In some instances, audio signal traffic associated with adding audio-processing extension module 120 requires more conductors than the conductors of audio network 302 that remain available, and control signal traffic associated with adding audio-processing extension module 120 requires conductors than the conductors of control network 304 that remain available. According to some embodiments, in such an instance, audio-processing extension module 120 can be implemented in audio system 150 so that audio network 302 is split into two networks that together can handle the additional audio signal traffic, and control network 304 is split into two networks that together can handle the additional audio signal traffic. One such embodiment is described below in conjunction with Figure 5.

Figure 5 is a conceptual illustration of an audio system 550 that includes audio-processing extension module 120, according to various embodiments. In some embodiments, audio system 550 is employed when an existing audio system is to be modified with audio-processing extension module 120 and neither the audio network nor the control network of the existing audio system can accommodate audio-processing extension module 120. In some embodiments, audio system 550 can be an automotive system for a vehicle that is consistent with audio system 150 of Figures 1 - 3. In audio system 550, audio-processing extension module 120 is communicatively coupled to ECU 110 and amplifier 130 via audio network 302 and control network 304. In the embodiment illustrated in Figure 5, audio-processing extension module 120 is communicatively coupled to audio network 302 in series with ECU 110 and amplifier 130 and to control network 304 in series with ECU 110 and amplifier 130. Thus, audio network 302 and control network 304 both pass through audio-processing extension module 120 as shown.

In the embodiment illustrated in Figure 5, audio-processing extension module 120 effectively converts audio network 302 into two sub-networks and control network 304 into two sub-networks. As a result, bandwidth limitations of audio network 302 and/or control network 304 can be reduced. Specifically, the additional audio signal traffic associated with audio-processing extension module 120 can be split between a first audio sub-network 502A and a second audio sub-network 502B, and the additional control signal traffic associated with audio-processing extension module 120 can be split between a first control sub-network 504A and a second control sub-network 504B.

In audio system 550, audio network 302 includes audio network I/F 414 of ECU 110, first audio bus 506, first audio network I/F 242, second audio network I/F 244, second audio bus 508, and audio network I/F 434 of amplifier 130. First audio sub-network 502A includes audio network I/F 414, first audio bus 506 and first audio network I/F 242, while second audio sub-network 502B includes second audio network I/F 244, second audio bus 508, and audio network I/F 434. For reference, first audio signal traffic 522 includes the audio signal traffic between ECU 110 and amplifier 130, second audio signal traffic 524 includes the audio signal traffic between ECU 110 and audio-processing extension module 120, and third audio signal traffic 526 includes the audio signal traffic between audio-processing extension module 120 and amplifier 130.

In operation, first audio sub-network 502A handles first audio signal traffic 522 and second audio signal traffic 524, while second audio sub-network 502B handles first audio signal traffic 522 and third audio signal traffic 526. Thus, audio signal traffic associated with audio-processing extension module 120 (e.g., second audio signal traffic 524 and third audio signal traffic 526) is split between first audio sub-network 502A and second audio sub-network 502B. Consequently, the effective bandwidth of audio network 502 is increased. For example, given an instance in which first audio signal traffic 522 (which includes the audio signal traffic between ECU 110 and amplifier 130) consumes 80% of the bandwidth of audio network 302, second audio signal traffic 524 and third audio signal traffic 526 can each consume 20% of the bandwidth of audio network 302, because second audio signal traffic 524 is handled by first audio sub-network 502A while third audio signal traffic 526 is handled by second audio sub-network 502B. It is noted that the above embodiment is enabled due to audio-processing extension module 120 including one or more internal buses (e.g., internal buses 250 in Figure 2) that each include a number of conductors matching the number of conductors of first audio sub-network 502A and audio sub-network 502B.

Similarly, the effective bandwidth of control network 504 is increased, where control network 504 includes control network I/F 418 of ECU 110, first control bus 510, first control network I/F 246, second control network I/F 248, second control bus 512, and control network I/F 438 of amplifier 130. First control sub-network 504A includes control network I/F 418, first control bus 510 and first control network I/F 246, while second control sub-network 504B includes second control network I/F 248, second control bus 512, and control network I/F 438. For reference, first control signal traffic 532 includes the control signal traffic between ECU 110 and amplifier 130, second control signal traffic 534 includes the control signal traffic between ECU 110 and audio-processing extension module 120, and third control signal traffic 536 includes the control signal traffic between audio-processing extension module 120 and amplifier 130. In operation, first control sub-network 504A handles first control signal traffic 532 and second control signal traffic 534, while second control sub-network 504B handles first control signal traffic 532 and third control signal traffic 536. Thus, control signal traffic associated with audio-processing extension module 120 (e.g., second control signal traffic 534 and third control signal traffic 536) is split between first control sub-network 504A and second control sub-network 504B.

### Hybrid Implementation of Processing Extension Module

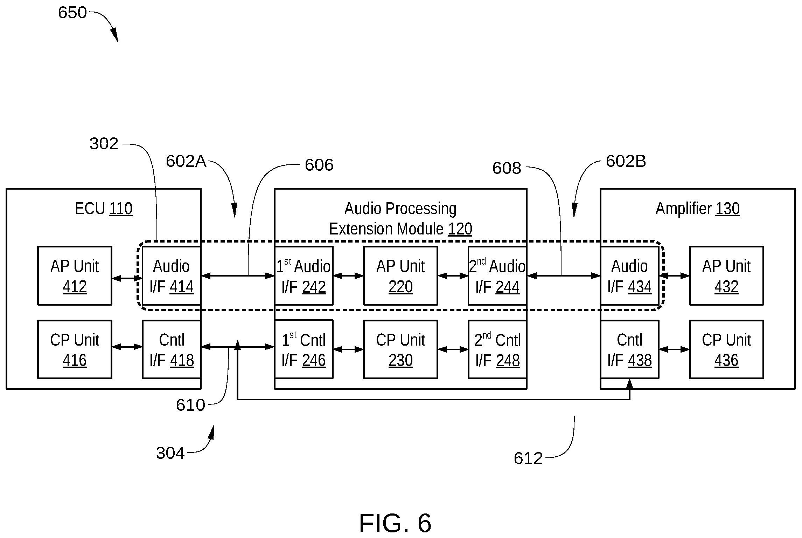

Returning to Figure 3, in some instances, audio system 150 can require additional processing and/or memory capabilities to implement one or more audio features, but can have a bandwidth-limited audio network. For example, in some embodiments, audio network 302 of audio system 150 may have insufficient bandwidth (available conductors) to handle audio signal traffic associated with audio-processing extension module 120, and control network 304 has sufficient available bandwidth to handle control signal traffic associated with audio-processing extension module 120. In such embodiments, audio-processing extension module 120 can be communicatively coupled to audio system 150 in a hybrid implementation, in which audio network 302 is split into two networks that together can handle the additional audio signal traffic, while control network 304 is implemented in audio system 150 as an additional node of control network 304. One such embodiment is described below in conjunction with Figure 6.

Figure 6 is a conceptual illustration of an audio system 650 that includes audio-processing extension module 120, according to various embodiments. In some embodiments, audio system 650 is employed when an existing audio system is to be modified with audio-processing extension module 120 and the audio network of the existing audio system cannot accommodate audio-processing extension module 120 while the control network of the existing audio system can accommodate audio-processing extension module 120. In some embodiments, audio system 650 can be an automotive system for a vehicle that is consistent with audio system 150 of Figures 1 - 3. In audio system 650, audio-processing extension module 120 is communicatively coupled to ECU 110 and amplifier 130 via audio network 302 and control network 304. In the embodiment illustrated in Figure 5, audio-processing extension module 120 is communicatively coupled to audio network 302 in series with ECU 110 and amplifier 130 and to control network 304 as an additional node of control network 304. Thus, audio network 302 passes through audio-processing extension module 120, while control network 304 is communicatively coupled to audio-processing extension module 120 as an additional node.

In the embodiment illustrated in Figure 6, audio-processing extension module 120 effectively converts audio network 302 into two sub-networks. As a result, bandwidth limitations of audio network 302 can be reduced. Specifically, the additional audio signal traffic associated with audio-processing extension module 120 can be split between a first audio sub-network 602A and a second audio sub-network 602B, while the additional control signal traffic associated with audio-processing extension module 120 is handled with the already available conductors of control network 304.

In audio system 650, audio network 302 includes audio network I/F 414 of ECU 110, first audio bus 606, first audio network I/F 242, second audio network I/F 244, second audio bus 608, and audio network I/F 434 of amplifier 130. First audio sub-network 602A includes audio network I/F 414, first audio bus 606 and first audio network I/F 242, while second audio sub-network 602B includes second audio network I/F 244, second audio bus 608, and audio network I/F 434. Control network 304 includes control network I/F 418 of ECU 110, buses 610 and 612, first control network I/F 246, and control network I/F 438 of amplifier 130. In some embodiments, second control network I/F 248 can be omitted from audio-processing extension module 120 due to amplifier 130 being communicatively coupled to ECU 110 via bus 612. Similar to the embodiment of Figure 5, audio signal traffic associated with audio-processing extension module 120 (not shown) is split between first audio sub-network 602A and second audio sub-network 602B. Consequently, the effective bandwidth of audio network 302 is increased.

### Audio System that Includes Multiple Processing Extension Modules

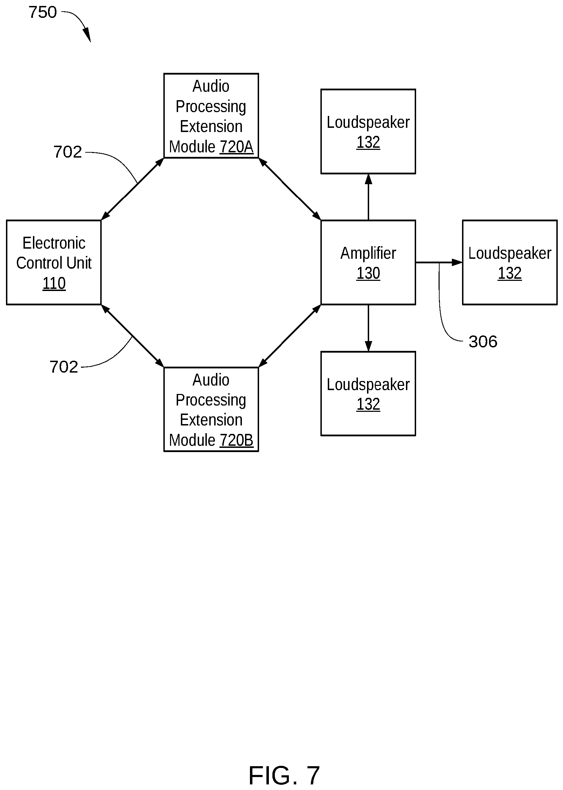

Figure 7 is a conceptual illustration of an audio system 750 that includes multiple audio-processing extension modules 720A and 720B, according to various embodiments. In some embodiments, audio system 750 can be an automotive system for a vehicle that is consistent with audio system 150 of Figures 1 - 3, except that audio system 750 includes multiple audio-processing extension module 720A and 720B. In such embodiments, audio-processing extension module 720A can provide certain additional processing capabilities to audio system 750 and audio-processing extension module 720B can provide different additional processing capabilities to audio system 750.

In audio system 750, audio-processing extension modules 720A and 720B are each communicatively coupled to ECU 110 and amplifier 130 via one or more one or more wired networks 702. In some embodiments, audio-processing extension modules 720A and 720B can each be communicatively coupled to the one or more wired networks 702 as an additional node similar to audio-processing extension module 120 in Figure 4. In some embodiments, audio-processing extension modules 720A and 720B can each be communicatively coupled to the one or more wired networks 702 in series with ECU 110 and amplifier 130, similar to audio-processing extension module 120 in Figure 5.

### Manufacturing Process for Audio System that Includes Processing Extension Module

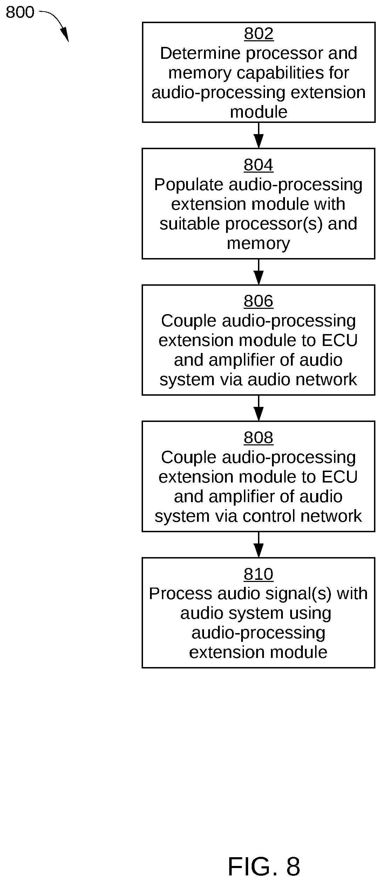

Figure 8 sets forth a flow diagram of method steps for manufacturing an audio system that includes audio-processing extension module 120, according to various embodiments of the present disclosure. Although the method steps are described with reference to the systems of Figures 1 - 7, persons skilled in the art will understand that implementation of the method steps to manufacture an audio system that includes an audio-processing extension module, in any order, falls within the scope of the present disclosure. Prior to the method steps, an instance of audio system 150 is designed to implement one or more initial automotive audio features in vehicle 100.

As shown, a method 800 begins at step 802, where processor and memory capabilities are determined for audio-processing extension module 120, where audio-processing extension module 120 is to be added to audio system 150. The processor and memory capabilities are determined based on one or more additional automotive audio features to be implemented by audio system 150 of vehicle 100. Due to the additional processing and/or memory requirements of the additional automotive audio features, audio-processing extension module is to be added to audio system 150.

In step 804, audio-processing extension module 120 is populated with suitable processor(s) and memory that meet the processing and/or memory requirements determined in step 802. Alternatively, in some embodiments audio-processing extension module 120 is populated with processor(s) and/or memory that exceeds the processing and/or memory requirements determined in step 802, to provide reserve resources that enable implementation of future features. In some embodiments, one or more components of audio-processing extension module 120 may be depopulated or removed from audio-processing extension module 120, such as when audio-processing extension module 120 has a basic configuration that includes certain components that are not needed to meet the processing and/or memory requirements determined in step 802.

In step 806, audio-processing extension module 120 is communicatively coupled to ECU 110 and amplifier 130 of audio system 150 via audio network 302 of audio system 150. In some embodiments, audio-processing extension module 120 is communicatively coupled to ECU 110 and amplifier 130 so that audio network 302 is split into two networks that together can handle the additional audio signal traffic associated with audio-processing extension module 120. In other embodiments, audio-processing extension module 120 is communicatively coupled to ECU 110 and amplifier 130 so that audio-processing extension module 120 is an additional node of audio network 302.

In step 808, audio-processing extension module 120 is communicatively coupled to ECU 110 and amplifier 130 of audio system 150 via control network 304 of audio system 150. In some embodiments, audio-processing extension module 120 is communicatively coupled to ECU 110 and amplifier 130 so that control network 304 is split into two networks that together can handle the additional control signal traffic associated with audio-processing extension module 120. In other embodiments, audio-processing extension module 120 is communicatively coupled to ECU 110 and amplifier 130 so that audio-processing extension module 120 is an additional node of control network 304.

In step 810, one or more audio signals are processed with audio system 150 using ECU 110, audio-processing extension module 120, and amplifier 130.

In sum, an audio-processing extension module enhances the audio-processing capabilities of an audio system without exceeding or limiting the bandwidth of one or more wired networks within the audio system. The audio-processing extension module includes additional processing capability and/or memory that enable the audio system to implement more computationally intensive audio features. In some embodiments, the audio-processing extension module is implemented in the audio system so that an audio network of the audio system is split into two networks that together can handle the additional audio signal traffic associated with the addition of the audio-processing extension module.

At least one technical advantage of the disclosed techniques relative to the prior art is that the disclosed techniques enable the audio system of a vehicle to be enhanced with audio processing and memory capabilities that are needed to implement audio features that otherwise cannot be implemented by the audio system. Thus, computationally intensive audio features that have been developed after the audio system electronics and networks of the vehicle have been finalized can still be performed by the audio system. A further advantage is that bandwidth limitations of audio system networks can be reduced by splitting an audio system network into two networks that together can handle the additional audio signal traffic associated with the enhanced processing and memory capabilities of the audio system. These technical advantages provide one or more technological advancements over prior art approaches.
1. In some embodiments, an audio processing module for a vehicular audio system comprises a housing, a first processor that performs additional audio signal processing for at least one of an electronic control unit of the vehicular audio system or an amplifier of the vehicular audio system and is disposed within the housing, a second processor that performs additional control signal processing for at least one of the electronic control unit of the vehicular audio system or the amplifier of the vehicular audio system and is disposed within the housing, a first communication bus that is disposed within the housing and is communicatively coupled to the first processor and a first communication network of the vehicular audio system, and a second communication bus that is disposed within the housing and is communicatively coupled to the second processor and a bus of a second communication network of the vehicular audio system.
2. The audio processing module of clause 1, wherein the first communication network comprises a network for handling audio signals within the vehicular audio system.
3. The audio processing module of clauses 1 or 2, wherein the second communication network comprises a network for handling control signals within the vehicular audio system.
4. The audio processing module of any of clauses 1-3, wherein the first communication network comprises a network for handling audio signals within the vehicular audio system and the second communication network does not handle the audio signals.
5. The audio processing module of any of clauses 1-4, further comprising a first physical audio interface that is disposed at least partially within the housing, is communicatively coupled to the first communication bus, and accommodates a first number of conductors equal to a number of conductors included in a bus of the first communication network of the vehicular audio system.
6. The audio processing module of any of clauses 1-5, wherein the first communication bus communicatively couples the first physical audio interface to the first processor.
7. The audio processing module of any of clauses 1-6, further comprising a third communication bus that is disposed within the housing and communicatively couples the second processor to the first physical audio interface.
8. The audio processing module of any of clauses 1-7, further comprising a second physical audio interface that is disposed at least partially within the housing and is communicatively coupled to the second communication bus.
9. The audio processing module of any of clauses 1-8, wherein the second physical audio interface accommodates a second number of conductors equal to a number of conductors included in a bus of the second communication network of the vehicular audio system.
10. The audio processing module of any of clauses 1-9, wherein the second communication bus communicatively couples the second physical audio interface to the second processor.
11. The audio processing module of any of clauses 1-10, wherein the first communication bus includes a first number of conductors equal to a number of conductors included in a bus of the first communication network of the vehicular audio system.
12. The audio processing module of any of clauses 1-11, wherein the second communication bus includes a second number of conductors equal to a number of conductors included in a bus of the second communication network of the vehicular audio system.
13. In some embodiments, a vehicular audio system comprises at least one loudspeaker, an amplifier communicatively coupled to the at least one loudspeaker, an electronic control unit communicatively coupled to the amplifier, and an audio processing module that is communicatively coupled to the amplifier and the electronic control unit and includes a housing, a first processor that performs additional audio signal processing for at least one of the electronic control unit or the amplifier and is disposed within the housing, a second processor that performs additional control signal processing for at least one of the electronic control unit or the amplifier and is disposed within the housing, a first communication bus that is disposed within the housing and is communicatively coupled to the first processor and a first communication network of the vehicular audio system, and a second communication bus that is disposed within the housing and is communicatively coupled to the second processor and a bus of a second communication network of the vehicular audio system.
14. The vehicular audio system of clause 13, wherein the audio processing module is communicatively coupled to an audio network of the vehicular audio system as an additional node.
15. The vehicular audio system of clauses 13 or 14, wherein the audio processing module is communicatively coupled to a control network of the vehicular audio system as an additional node.
16. The vehicular audio system of any of clauses 13-15, wherein the audio processing module is communicatively coupled to a first sub-network of the first communication network and a second sub-network of the first communication network.
17. The vehicular audio system of any of clauses 13-16, wherein the audio processing module further comprises a first physical audio interface that is communicatively coupled to the first sub-network and a second physical audio interface that is communicatively coupled to the second sub-network.
18. The vehicular audio system of any of clauses 13-17, wherein the first communication bus communicatively couples the first physical audio interface to the first processor and a third communication bus within the audio processing module communicatively couples the second physical audio interface to the first processor.
19. The vehicular audio system of any of clauses 13-18, wherein the first sub-network is communicatively coupled to the electronic control unit and the second sub-network is communicatively coupled to the amplifier.
20. The vehicular audio system of any of clauses 13-19, further comprising an additional audio processing module that is communicatively coupled to the amplifier and the electronic control unit.

Any and all combinations of any of the claim elements recited in any of the claims and/or any elements described in this application, in any fashion, fall within the contemplated scope of the present invention and protection.

The descriptions of the various embodiments have been presented for purposes of illustration but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. An audio processing module for a vehicular audio system, comprising:
a housing;
a first processor that performs additional audio signal processing for at least one of an electronic control unit of the vehicular audio system or an amplifier of the vehicular audio system and is disposed within the housing;
a second processor that performs additional control signal processing for at least one of the electronic control unit of the vehicular audio system or the amplifier of the vehicular audio system and is disposed within the housing;
a first communication bus that is disposed within the housing and is communicatively coupled to the first processor and a first communication network of the vehicular audio system; and
a second communication bus that is disposed within the housing and is communicatively coupled to the second processor and a bus of a second communication network of the vehicular audio system.

2. The audio processing module of claim 1, wherein the first communication network comprises a network for handling audio signals within the vehicular audio system.

3. The audio processing module of claim 1 or 2, wherein the second communication network comprises a network for handling control signals within the vehicular audio system and preferably the first communication network comprises a network for handling audio signals within the vehicular audio system and the second communication network does not handle the audio signals.

4. The audio processing module of any preceding claim, further comprising a first physical audio interface that is disposed at least partially within the housing, is communicatively coupled to the first communication bus, and accommodates a first number of conductors equal to a number of conductors included in a bus of the first communication network of the vehicular audio system.

5. The audio processing module of claim 4, wherein the first communication bus communicatively couples the first physical audio interface to the first processor.

6. The audio processing module of claim 4 or 5, further comprising a third communication bus that is disposed within the housing and communicatively couples the second processor to the first physical audio interface.

7. The audio processing module of any preceding claim, further comprising a second physical audio interface that is disposed at least partially within the housing and is communicatively coupled to the second communication bus.

8. The audio processing module of claim 7, wherein the second physical audio interface accommodates a second number of conductors equal to a number of conductors included in a bus of the second communication network of the vehicular audio system and/or
the second communication bus communicatively couples the second physical audio interface to the second processor.

9. The audio processing module of any preceding claim, wherein the first communication bus includes a first number of conductors equal to a number of conductors included in a bus of the first communication network of the vehicular audio system.

10. The audio processing module of any preceding claim, wherein the second communication bus includes a second number of conductors equal to a number of conductors included in a bus of the second communication network of the vehicular audio system.

11. A vehicular audio system, comprising:
at least one loudspeaker;
an amplifier communicatively coupled to the at least one loudspeaker;
an electronic control unit communicatively coupled to the amplifier; and
an audio processing module that is communicatively coupled to the amplifier and the electronic control unit and includes:
a housing;
a first processor that performs additional audio signal processing for at least one of the electronic control unit or the amplifier and is disposed within the housing;
a second processor that performs additional control signal processing for at least one of the electronic control unit or the amplifier and is disposed within the housing;
a first communication bus that is disposed within the housing and is communicatively coupled to the first processor and a first communication network of the vehicular audio system; and
a second communication bus that is disposed within the housing and is communicatively coupled to the second processor and a bus of a second communication network of the vehicular audio system.

12. The vehicular audio system of claim 11, wherein the audio processing module is communicatively coupled to at least one of the following:
- an audio network of the vehicular audio system as an additional node,
- a control network of the vehicular audio system as an additional node,
- a first sub-network of the first communication network and a second sub-network of the first communication network.

13. The vehicular audio system of claim 12, wherein the audio processing module further comprises a first physical audio interface that is communicatively coupled to the first sub-network and a second physical audio interface that is communicatively coupled to the second sub-network and preferably the first communication bus communicatively couples the first physical audio interface to the first processor and a third communication bus within the audio processing module communicatively couples the second physical audio interface to the first processor.

14. The vehicular audio system of claim 12 or 13, wherein the first sub-network is communicatively coupled to the electronic control unit and the second sub-network is communicatively coupled to the amplifier.

15. The vehicular audio system of claim 14, further comprising an additional audio processing module that is communicatively coupled to the amplifier and the electronic control unit.
